# EUROPEAN PATENT APPLICATION

(11) **EP 3 958 100 A1**
(43) Date of publication of application: **23.02.2022**
(21) Application number: 20192158.2
(22) Date of filing: 21.08.2020
(51) Int. Cl.: G06F 3/041, G06F 3/044

(54) **ANOMALY DETECTION FOR SENSOR SYSTEMS**

(71) Applicant: Microsoft Technology Licensing, LLC, Redmond, WA 98052-6399 (US)
(72) Inventor: BEN AMRAM, Nadav Shlomo, Redmond, WA 98052-6399 (US); BIRENBERG, Dmitry, Redmond, WA 98052-6399 (US); AVIV, Tal, Redmond, WA 98052-6399 (US); LIVNY, Yotam, Redmond, WA 98052-6399 (US)
(74) Representative: Townsend, Martyn

(57) **Abstract**

An apparatus and method for improving signal quality of a sensor signal, wherein an Al-based anomaly detector is configured to recognize an anomaly in a sensor output data stream. This approach can be used to predict and identify rare anomaly signals that are not handled properly by noise removal algorithms and help subsequent algorithms to get better decisions on the fly to better handle anomalous samples.

## Description

### Background

Electronic devices, especially tablets or smart phones, may accept input via hand-held peripheral input devices, such as a pen or stylus, and may then act as host devices to the input devices. The input device may be held manually by a user in relation to a touch screen to provide input to the electronic device. Positions of the input device over the touch screen are correlated with virtual information portrayed on the touch screen. A touch position of the input device can be detected due to a small change in capacitance at a contact point on the touch screen.

### Summary

This Summary is provided to introduce a selection of concepts in simplified form that are further described below in the Detailed Description. This Summary is not intended to identify key features or essential features of the claimed subject matter, nor is it intended to be used to limit the scope of the claimed subject matter. Nor is the claimed subject matter limited to implementations that solve any or all of the disadvantages noted herein.

According to an aspect, the disclosure in some embodiments relates to an apparatus for improving signal quality of a sensor signal. The apparatus may comprise a receiver for receiving an input signal from a sensor device. The apparatus may further comprise at least one artificial intelligence, Al, processing module for detecting an anomaly of the input signal by using an AI algorithm, an analyzer for classifying the detected anomaly and a signal processor for initiating an anomaly handling process based on the result of the classification.

According to another aspect, a host device may comprise the above apparatus of the first aspect, a touch screen and a digitizer.

According to a further aspect, a method of improving signal quality of a sensor signal may comprise receiving an input signal from a sensor device. The method may further comprise detecting an anomaly of the input signal by using an artificial intelligence algorithm, analyzing the detected anomaly, and initiating an anomaly handling process based on the result of the classification.

Unless otherwise defined, all technical and/or scientific terms used herein have the same meaning as commonly understood by one of ordinary skill in the art. Although methods and materials similar or equivalent to those described herein can be used in practice or testing of embodiments of the disclosure, example methods and/or materials are described below. In addition, the materials, methods, and examples are illustrative only and are not intended to be necessarily limiting.

### Brief Description of the Drawings

To assist understanding of the present disclosure and to show how embodiments of such may be put into effect, reference is made, by way of example only, to the accompanying drawings in which:
Figure 1 is a schematic block diagram of an example system comprising a stylus and a host device,
Figure 2 is schematic block diagram of a touch screen system with an anomaly detection process for identifying and handling a distorted sensor signal of a touch screen sensor,
Figure 3 is a schematic flow diagram of an anomaly detection and classification procedure, and
Figure 4 is a schematic block diagram of an example system with stylus feedback option.

### Detailed Description of Embodiments

The present disclosure is directed to anomaly detection for a touch-sensitive display system.

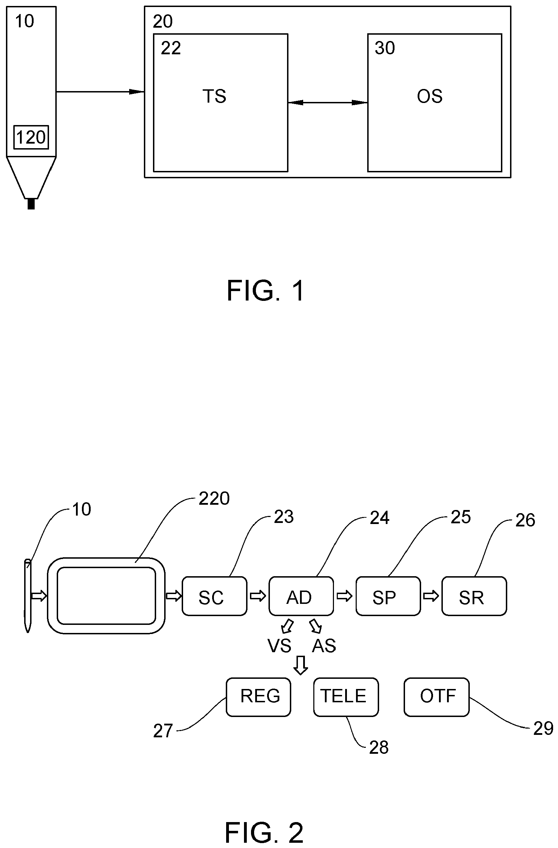

Figure 1 is a schematic illustration of an example system comprising a host device 20 (e.g. an electronic device with a touch-sensitive display device, including a smart phone, a tablet, a watch, a desktop computer, a gaming device, a wearable device, a television, a video conferencing system, etc.) and a hand-held stylus peripheral ("stylus") 10 with an input/output unit 12 for receiving an uplink signal received from the host device 20. Furthermore, the stylus 10 may comprise a pressure sensor 120 configured to sense a pressure or force applied to a tip electrode 14 of the stylus 10. The stylus may be capable of transmitting output data (e.g. measured pressure or force data) of the pressure sensor to the host device 20 via a downlink signal. The host device 20 comprises a touch screen (TS) 22 (touch-sensitive display) and an operating system (OS) 30 for controlling the touch screen 22.

The stylus 10 is used to communicate user input to the host device 20. The touch screen 22 may include a built-in digitizer to sense signals transmitted from the stylus 10. A user interacts with the digitizer by positioning and moving the tip electrode 14 of the stylus 10 over a sensing surface of the touch screen 22. The position of the tip electrode 14 of the stylus 10 with respect to the sensing surface is tracked by the digitizer and interpreted as a user command. In some technologies, the position of the stylus 10 can be determined based on detection of capacitive coupling between the tip electrode 14 of the stylus and one or more electrodes of the digitizer. For example, the touch screen 22 may include a digitizer with a plurality of X and Y oriented conductors or a resistive film to receive downlink signals transmitted from the tip electrode 14 of the stylus 10. To accurately identify the tip position, the transmitting electrode is, in some technologies, physically positioned within the writing tip electrode 14 of the stylus 10.

The stylus 10 can be classified as a passive stylus or an active stylus. A passive stylus utilizes sensing methods based on changes in the capacitive coupling between sensor electrodes deposited on a touch-screen sensor and an input object, such as a rubber-tipped stylus. In contrast, an active stylus drives unique modulated downlink signals between the tip electrode 14 of the stylus 10 and a grid or matrix of electrodes of a touch-screen sensor of the digitizer and utilizes sensing methods based on changes in the capacitive coupling between sensor electrodes. The digitizer detects at least one position of the stylus 10 based on the downlink signal emitted and the detected position provides input to the host device 20 associated with the digitizer. The detected position may then be interpreted as user commands. Often, the digitizer may be integrated with touch screen 22, e.g., to form a touch-sensitive display device.

Furthermore, the stylus 10 may communicate pressure information detected by the pressure sensor 120 to the host device 20 for digital ink weighting. One of the features of digital ink is force/pressure sensitivity which allows line thickness control by the user of the stylus 10.

If the stylus 10 is an active stylus it may generate a modulated downlink signal that may be detectable by the digitizer. The signal may be encoded with information such as the device identification, operational mode (e.g., writing, erasing), pressure/force information, tilt information, and other information. The information may be allocated to various portions of the signal.

If the stylus 10 is a passive stylus, it may utilize sensing methods based on changes in the capacitive coupling between sensor electrodes deposited on a touch-screen sensor and an input object, such as a rubber-tipped stylus. In such implementations, the stylus 10 may communicate detected pressure/force information to the host device 20 using communication protocols such as Wi-Fi, Bluetooth, etc.

The information (e.g., pressure/force information) transmitted by the stylus 10 is detected by the host device 20 and used to provide functionality in the display of the host device 20. For example, the host device 20 may detect that the stylus 10 is in a writing mode with identifiable pressure/force information. The host device 20 can use that information (in combination with position information detected through the digitizer) to display digital ink with a thickness or color dependent on the pressure/force information encoded in the signal. For example, a light touch may indicate a relatively finer or lighter line should be draw on the display of the touch screen 22. As the user increases pressure/force on the stylus 10, the weight (e.g. darkness or thickness) of the line may increase accordingly.

Thus, downlink transmission of information is achieved by electrostatic communication from the stylus 10 to the digitizer of the host device 20, wherein the digitizer is configured to extract the position of the stylus based on the downlink signal and the stylus 10 may modulate data on the downlink signal to transmit a pen identity, a force applied on its tip electrode 14, pressure levels, a button indication, etc.

Additionally, uplink transmission of information is achieved via a communication link from the digitizer of the host device 20 to the stylus 10. The uplink transmission link can be used by the stylus 10 to acquire e.g. digitizer timing and cycle length to be able to ink on the display of the host device 20 and/or receive data from the digitizer, e.g., which frequency shall be used to transmit the downlink signal, to couple the stylus 10 and the host device 20 (e.g. its operating system 30) through the digitizer, and/or to update the software for the stylus 10 at the host device 20 (e.g. its operating system 30) through the digitizer.

As an example, a touch screen driving signal may be applied to the touch screen 22. The touch screen driving signal may include an uplink signal for synchronization with the stylus 10 and a touch sensor driving signal for sensing a touch input applied to the touch screen 22. When the stylus 10 is brought into contact with the touch screen 22, the stylus 10 receives the uplink signal from the touch screen 22, generates a downlink signal (i.e. pen driving signal) in synchronization with the touch sensor driving signal on the basis of the uplink signal and outputs the generated downlink signal to the touch screen 22 e.g. through the tip electrode 14. Since the downlink signal is synchronized with the touch sensor driving signal, it serves to increase sensitivity of the touch sensor driving signal.

The calculation of the position of the stylus 10 on the surface of the touch screen or pressure/force-based inking parameters may thus be based on signal transmission from the stylus 10 and signal sampling at the digitizer of the host device 20. In such a broadcast and sampling process, the signal is often distorted due to several reasons and in many ways, including own hardware noise, interference through other components in the system which use a similar range of frequencies or their harmonics (e.g. display noises), a user with his/her palm on the touch screen 22 (especially in case of an ungrounded device), and many other sources of noise and/or interference.

However, a distorted signal creates position or inking errors when the stylus position or pressure/force is calculated at the host device 20 and thereby affects user experience.

There are conventional cleaning (correction) algorithms which can handle various familiar noise or interference types. However, there are still noise patterns and cases which cannot be cleaned well enough by such conventional cleaning algorithms. As a result, the signal received at the digitizer of the host device 20 is distorted in many ways and due to different reasons among different host devices 20, which makes it's difficult to test the signal quality before position calculation.

According to various embodiments, it is therefore proposed to provide at least one artificial intelligence (AI) processor that involves a supervised or unsupervised AI algorithm (e.g. machine learning algorithm, neural network etc.) that is trained by a (self-)learning process so as to be fitted to discriminate valid stylus signals (e.g. position and/or pressure/force signals which may be digital Fourier transforms (DFTs) in the frequency domain) from non-valid signals (anomaly signals) in the digitizer output stream of the host device 20 e.g. on the fly. This AI-based approach can be used to predict and identify rare anomaly signals (e.g. corrupted signals or bad-quality signals) that may not be handled properly by conventional noise removal algorithms at the host device (e.g. digitizer) and thus helps to get better decisions on the fly to better handle position samples with anomalies.

It is noted that the at least one AI processor may be a single processor (e.g. a (main) CPU of the host device where the AI algorithm is run on the host device (e.g. laptop, notebook, personal computer (PC) etc.)) or part of an offline or big-data analysis system with more than one AI processors for multiple styluses or a cloud computing system with more than one AI processors.

Due to the learning capability of the at least one AI processor, wider areas of signal noise or interference scenarios and future uncharacterized noise or interference scenarios can be handled. More specifically, the at least one AI processor enables detection of at least one of early hardware problems that create anomaly signals, unknown and unfamiliar noise patterns, and distorted signals which cannot be or are difficult to be defined with conventional determinist test algorithms. As a result, user experience of the performance of the touch screen system can be improved, as less position and/or pressure/force errors are created due to the identification and proper handling of anomaly signals.

Figure 2 is schematic block diagram of a touch screen system with an Al-based anomaly detection process for identifying and handling a distorted sensor signal of a touch screen sensor.

A stylus 10 interacts with a digitizer 220 of a host device, wherein the output signal generated by the digitizer 220 (e.g. a digital Fourier transform (DFT) in the frequency domain) is based on the output from an electrode of a capacitance-based touch sensor, which may consist of a desired touch and/or pressure/force signal, an offset, and noise or unwanted signal.

The noise in touch screen systems introduces detection errors, which lead to "fake" touch or mis-registration of touch location and/or pressure/force. In addition to that, the noise and a global multi-valued offset result in high power consumption. Therefore, the output signal of the digitizer 220 is supplied to a signal cleaner (SC) 23 which applies at least one signal cleaning processing to remove deterministic noise and interference (i.e. non-anomaly signals), such as e.g. common-mode noise or global multi-valued offset or other fixed pattern noise. As an example, a correlated double sampling (CDS) algorithm may be used. The offset together with common-mode noise can be canceled by CDS leaving signal and high frequency noise which can be filtered so as not to overlap with the touch signal frequencies. As an alternative, a signal cleaning processing may be based on at least one of margins, average, distance from average, histogram(s) of the output signal of the digitizer 220.

However, as indicated above, despite the above signal cleaning process, there are still unexpected or non-deterministic noise patterns and cases which cannot be cleaned well enough by the signal cleaner 23. Therefore, an Al-based anomaly detector 24 is provided, which comprises the above mentioned AI processor that applies an AI anomaly detection algorithm to identify remaining anomaly signals (e.g. artifacts) on the fly and thereby discriminate between a valid sensor signal (VS), i.e. position signal, and an anomaly signal (AS). Both signal components may be supplied to a regression analysis unit (REG) 27 (e.g. a signal processor) for generating regression reports and/or to a telemetry unit (TELE) 28 for collection of measurements, positional errors, cross-device defects and/or other data related to the valid position and/or pressure/force signal and/or the anomaly signal and transmission e.g. to receiving equipment for monitoring. Furthermore, the detected anomaly may be handled by an on-the-fly (OTF) process 29 e.g. by dropping the bad signal or applying a correction algorithm which corrects a possibly resultant position and/or pressure/force error e.g. by a position and/or pressure/force estimation or interpolation or filtering or smoothing process. Examples of the OTF process 29 may be to adjust the further behavior of stylus position algorithm(s) (e.g. in case of a detected anomaly frame, the next algorithms may be notified to change their process (e.g. skip and/or different tuning etc.)) and/or to skip a frame and interpolate the position (e.g. in case of a detected anomaly frame, the stylus position calculation for this frame is skipped and the previous one is interpolated with the next available (valid) one to get a more accurate stylus position).

The cleaned position and/or pressure/force signal without anomaly signal component is then supplied to a stylus position calculation and/or inking unit (SP) 25 where the current position of and/or the pressure/force applied to the tip electrode of the stylus 10 on the touch screen is calculated based on the valid position and/or pressure/force signal. Then, the calculated position and/or pressure/force may be used for generating a stylus report (e.g. feedback) at a stylus reporting unit (SR) 26.

The anomaly detector 24 may be configured to recognize, evaluate and classify patterns in the data of the cleaned position and/or pressure/force signal outputted from the signal cleaner 23 to detect e.g. at least one of early hardware problems that create anomaly signals, unknown or unfamiliar noise patterns, and interference signals that are difficult to define with deterministic test algorithms.

Anomaly detection is a mode of detecting and identifying anomalous data in any data-based event or observation that differs from typically expected data. Anomalous data can be critical in detecting a rare data pattern or potential problem in the form malfunctioning equipment. Any data object or point that significantly deviates from the remaining data points can be identified as an outlier. In data mining, outliers are commonly discarded as an exception or simply noise. However, the same cannot be done in anomaly detection, hence the emphasis on outlier analysis.

In an example, the anomaly detector may apply a machine learning algorithm where desired input signals without anomalies and a resulting desired outcomes are provided in a learning phase and the machine learning algorithm is allowed to develop its own path to achieve its set goal. The machine learning algorithms may be implemented as a neural network where nodes and connection are programmed e.g. during a learning phase.

An example of performing anomaly detection using machine learning is the so-called K-means clustering method. This method is used to detect outliers based on their plotted distance from the closest cluster. K-means clustering method involves the formation of multiple clusters of data points each with a mean value. Objects within a cluster have the closest mean value. Any object with a threshold value greater than the nearest cluster mean value is identified as an outlier. A step-by-step method used in K-means clustering may involve calculating a mean value of each cluster, setting an initial threshold value, determining the distance of each data point from the mean value during a testing process (learning phase), and identifying the cluster that is nearest to the test data point. If a distance value is more than a predetermined threshold value is then mark it as an outlier.

Thus, as already mentioned above, the AI-based approach with a machine learning algorithm enables to prediction and identification of rare anomaly signal components (e.g. corrupted signals or bad-quality signals) within the cleaned position and/or pressure/force signal that cannot be handled properly by conventional noise removal algorithms e.g. of the signal cleaner 23 at the host device (e.g. digitizer), so that better decisions can be made on the fly to better handle position and/or pressure/force samples with anomalies.

Due to the learning capability of the AI processor at the anomaly detector 24, wider areas of signal noise or interference scenarios and future uncharacterized noise or interference scenarios can be handled. More specifically, the AI algorithm used by the AI processor at the anomaly detector 24 enables detection of at least one of early hardware problems of the stylus 10 or digitizer 220 that create anomaly signals, unknown and unfamiliar noise patterns, and distorted signals which cannot be or are difficult to be defined with conventional determinist test algorithms used by the signal cleaner 23. As a result, user experience of the performance of the touch screen system can be improved, as less position and/or pressure/force errors are created due to the identification and proper handling of anomaly signals outputted from the digitizer 220.

If a supervised learning algorithm is used by the Al processor of the anomaly detector 24, anomaly detection requires the existence of a labeled dataset that contains both normal and anomalous data points. Examples of supervised methods include anomaly detection using neural networks, Bayesian networks, and the K-nearest neighbors (or k-NN) method. Supervised anomaly detection provides a better rate of anomaly detection in the output signal of the digitizer 220 thanks to their ability to encode any interdependency between variables and including previous data in any predictive model.

In another example, the AI-based anomaly detection algorithm used by the AI processor of the anomaly detector 24 may be implemented as an unsupervised learning algorithm that allows raw, unlabeled data to be used to train the anomaly detector 24 with little or no human involvement during the learning process. In unsupervised learning, the anomaly detector 24 simply interacts with the touch screen system to discriminate anomaly signals from valid (i.e. usual) position and/or pressure/force signals. Thus, unsupervised methods of anomaly detection do not depend on any training data with manual labeling. These methods are based on a statistical assumption that most of the inflowing data are normal and only a minor percentage would be anomalous data. These methods also estimate that any malicious data would be different statistically from normal data. Some of the unsupervised methods include the above K-means method, autoencoders, and hypothesis-based analysis. As a result, an improved AI-based error correction can be achieved for the touch screen system which is trained by a self-learning process and is thus readily available with little or no human involvement.

In a further example, reinforcement learning algorithm may be applied by the AI processor at the anomaly detector 24, where rewards are given if it the anomaly detector 24 detects real anomaly signals and penalties if it erroneously qualifies a valid position signal (component) as an anomaly signal, as the anomaly detector 24 operates in the touch screen system. Reinforcement learning differs from the above supervised learning in not needing labelled input/output pairs be presented, and in not needing sub-optimal actions to be explicitly corrected. Instead the focus is on finding a balance between exploration (of uncharted territory) and exploitation (of current knowledge). This provides the technical advantage that an improved AI-based error correction can be achieved for the touch screen system that enables the AI processor of the anomaly detector 24 to shorten the set-up phase and learn in an interactive environment by trial and error using feedback from its own actions and experiences.

In a still further example, transfer learning may be applied by the AI signal processor of the anomaly detector 24, where an already trained model is implemented and then applied to a completely new problem (i.e. detection of anomalies in stylus position signal). This provides the technical advantage that an improved AI-based error correction can be achieved for the touch screen system that reuses or transfers information from previously learned tasks for the learning of new tasks to significantly improve error correction efficiency.

In a still further example, active learning may be applied in the anomaly detector 24, where the anomaly detector 24 only requests more labeled data (e.g. learning data) if it needs it, e.g., due to excessive erroneous detection of anomaly signals. This provides the technical advantage that an improved AI-based error correction can be achieved for the touch screen system, where the learning algorithm of the AI processor can choose the data it wants to learn from can thus achieve higher error correction efficiency with substantially less data for training.

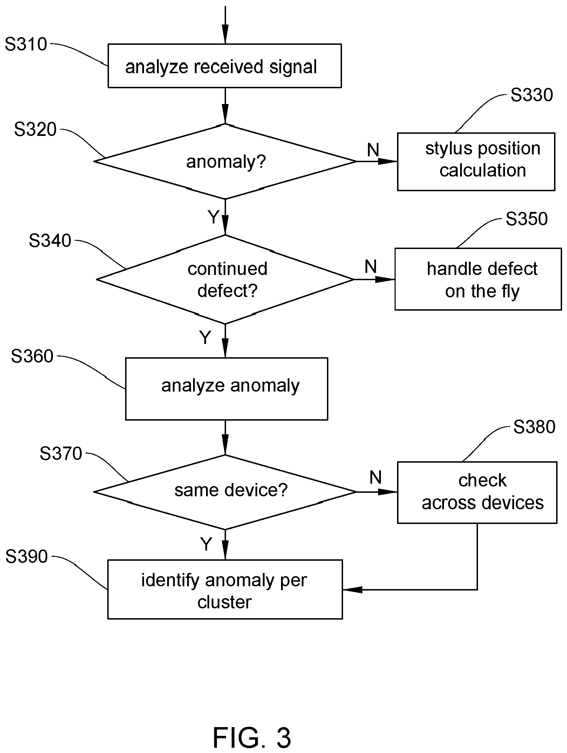

Figure 3 is a schematic flow diagram of an anomaly detection and classification procedure according to an embodiment, which may be implemented as a software routine controlling a processor (e.g. central processing unit (CPU)) of the host device.

In step S310, a received output signal (e.g. position and/or pressure/force signal) from a digitizer of a touch screen, which may have been cleaned by a cleaning algorithm as described above, is analyzed by using an AI-based anomaly detection algorithm as described above. Then, in step S320, it is determined whether an anomaly signal has been detected. If not, the procedure branches off to step S330 where the stylus position and/or pressure/force is calculated as usual based on the received valid position and/or pressure/force signal. Otherwise, if an anomaly signal has been detected in step S320, the procedure continues with step S340 where it is checked whether the detected anomaly signal is a continued defect, i.e., a defect that has been detected at least once before. If not, the anomaly signal is treated as a singular bad signal and the procedure branches to step S350 where the defect is handled on the fly e.g. by dropping the bad signal or applying a correction algorithm which corrects a possibly resultant position and/or pressure/force error e.g. by a position and/or pressure/force estimation or interpolation or filtering or smoothing process. Examples of operations in step S350 may be to adjust the further behavior of stylus position algorithm(s) (e.g. in case of a detected anomaly frame, the next algorithms may be notified to change their process (e.g. skip and/or different tuning etc.)) and/or to skip a frame and interpolate the position (e.g. in case of a detected anomaly frame, the stylus position calculation for this frame is skipped and the previous one is interpolated with the next available (valid) one to get a more accurate stylus position).

If it is determined in step S340 that the anomaly signal is a continued defect, the anomaly is analyzed in step S360. Thereafter, it is checked in step S370 as to whether it has always occurred when the same input device (i.e. stylus) or type of input device has been used or across different input devices (i.e. different styluses) or type of input devices. This can be achieved by storing previously detected anomaly signals or patterns in association with the related input devices and/or users in a database at the host device or in a remote database (e.g. cloud).

If it is determined in step S370 that the detected anomaly has occurred across different input devices or types of input devices, the procedure branches off to step S308, where the anomaly is checked across the identified devices to determine a cause of the anomaly (e.g. single production error on same batch, error on one production batch compare to other production batches etc.).

Otherwise, if it is determined in step S370 that the detected anomaly has always occurred in the same input device or type of input device e.g. over a certain time period, the anomaly is categorized as an isolated anomaly and the procedure continues with step S390 where it is analyzed whether the same input device or type of input device is solid in its anomaly behavior (i.e. not substantially changing its behavior over time) and does not create any anomaly compared to its former behavior. This analysis may reveal a continuous or constant user experience when using a similar input device for a long time.

A combination of the results of both steps S380 and S390 can be used to cluster multiple input devices to generate "families of devices". A family may contain one member only so that an isolated anomaly approach is used for handling the anomaly, while a family with multiple members leads to a cross-device anomaly handling approach. The clustering criteria may be defined based on the input devices or type of input devices and desired analysis (e.g. cluster per batch, cluster per product, cluster per user geo-location, cluster per hours or month usage, cluster per used applications etc.). Then, anomalies could be identified per cluster (given that a family should have high sensitivity/fidelity for checked anomalies).

The anomaly detection and classification procedure of Fig. 3 provides the technical advantage that cause(s) of a detected anomaly, such as a single production error on the same batch of the stylus and/or digitizer, an error on one production batch of the stylus and/or digitizer compare to other production batches etc., can be determined, which could not be determined by conventional signal cleaning processes. Moreover, the anomaly detection and classification procedure of Fig. 3 allows to determine whether the same stylus and/or digitizer or type of stylus and/or digitizer is solid in its anomaly behavior (i.e. not substantially changing its behavior over time) or creates an anomaly compared to its former behavior. This analysis may reveal a continuous or constant user experience when using a similar input device for a long time.

The operations of Figure 3 may be continuously or intermittently repeated.

In the following, an example of a touch screen system with AI-based anomaly detection will be described.

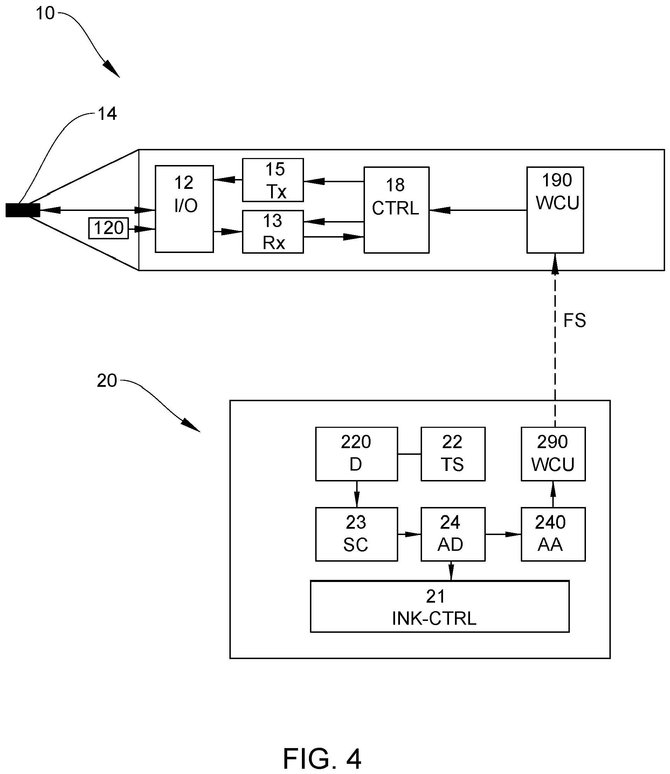

Figure 4 is a schematic block diagram of an example system comprising a host device (e.g. laptop or other electronic device with touch-sensitive screen) and a stylus 10 with stylus feedback option.

According to Figure 4, the host device 20 comprises a touch screen (TS) 22 with a touch screen driver (not shown) which controls a digitizer (D) 220 with a touch sensor (e.g. an array or matrix of sensor elements or antennas) of the touch screen 22. The touch screen driver applies a touch screen driving signal to the sensor elements of the digitizer 220 and senses the amount of change in the charge of the sensor elements to determine a touch input. The touch screen driving signal includes an uplink signal to be detected by the stylus 10 and a touch sensor driving signal.

Furthermore, the touch screen driver analyzes charge variations of the touch sensor of the digitizer 220 depending on the presence or absence of a touch input, determines or detects the touch input, and calculates coordinates of the touch input position.

The touch screen 22 may be configured as an in-cell liquid crystal display (LCD) panel that also includes a touch screen functionality by positioning at least one of the touch layers (typically a transmit (TX) layer) under a color filter glass. Furthermore, typically the TX layer is shared with a common electrode (reference layer) of the touch screen 22. The touch screen driver may be a capacitive touch screen driver that is used to measure the capacitance on the array of electrodes (sensor elements), such as an array including multiple transmit (TX) electrodes and multiple receive (RX) electrodes. An integrated circuit of the is typically the integrated circuit (IC) positioned on the substrate glass of the LCD which drives the timing and video signals to the LCD. While the above description is for in-cell LCD, similar stack-ups exist for other display types, such as active-matrix organic light- emitting diode (AMOLED).

The sensor signal (e.g. position and/or pressure/force signal) outputted by the digitizer 220 and based on a touch operation (with or without downlink signal) of the stylus 10 is supplied to a signal cleaner (SC) 23 which applies a signal cleaning process as described in connection with Figure 2. The cleaned signal is then supplied to an AI-based anomaly detector (AD) 24 which applies an anomaly detection process as described in connection with Figure 2.

Additionally, a valid signal or component of the sensor signal outputted from the digitizer 220 and processed by the signal cleaner 23 and the anomaly detector 24 is forwarded to an ink control (INK-CTRL) application or unit (e.g. a drawing application or unit) 21, where it is utilized to generate digital ink at a determined position of the stylus 10 e.g. with a weight (e.g., thickness or darkness) or other ink parameter corresponding to a reported force, pressure or inking level included in the downlink signal (if any) received from the stylus 10.

Furthermore, an anomaly analyzer (AA) 240 may be provided which applies the anomaly detection and classification procedure of Figure 3 to classify and/or cluster detected anomalies and to control the touch screen system based on detected anomalies (e.g. control parameters of the digitizer 220 and/or the stylus 10).

The signal cleaner 23, the anomaly detector 24, the anomaly analyzer 240, the ink control unit or application 21 and other system components of the host device 20 may be implemented in an application specific integrated circuit (ASIC), a system on chip (SOC), a field programmable gate array (FPGA), a micro-processing unit, etc.

The tip electrode 14 of the stylus 10 may be formed of a conductive material such as a metal, or the like, and protrudes outwardly from one side of the housing to serve as an input/output electrode. Since the tip electrode 14 serves as an input/output electrode, a structure of the stylus 10 is advantageously simplified. When the tip electrode 14 touches the touch screen 22 of the host device 20, the tip electrode 14 is coupled to the touch screen 22 in the contact point. The tip electrode 14 receives a touch screen driving signal (uplink signal) from the touch screen 22 at the contact point and outputs a pen driving signal (downlink signal) produced within the stylus 10 to the contact point of the touch screen 22. When the tip electrode 14 touches the touch screen 22 of the host device 20, the input/output unit 12 of the stylus 10 electrically connects the tip electrode 14 and a reception unit 13 during a reception period, and electrically connects the tip electrode 14 and a transmission unit (Tx) 15 during a transmission period to thereby temporally separate a reception timing of the uplink signal (touch screen driving signal) and a transmission timing of the downlink signal (pen driving signal).

The reception unit 13 comprises at least one amplifier and at least one comparator and digitally processes the uplink signal input through the input/output unit 12 during the reception period.

The stylus 10 may further comprise one or more processing units (e.g. controller (CTRL)) 18 e.g. with a memory for onboard storage of user files, user specifications, etc. The memory may be a tangible processor-readable storage and may store processor readable instructions for communication and digital inking through the host device 20. The stylus 10 may comprise a display (not shown) that may display to the user any of the following: the power status of the battery, the current wireless signal strength, or other information relating to the host device 20 configured to receive user input from the stylus 10.

The processing unit 18 may analyze a pattern (i.e., pulse duty, number of pulses, and the like) of the uplink signal to check its validity. When a normal uplink signal is detected, the processing unit 18 determines that the uplink signal is valid and generates a pen driving signal (downlink signal) synchronized with a touch sensor driving signal included in the uplink signal. The processing unit 18 may refer to signal generation conditions (e.g. period, duty, number, and the like) of a default parameter set installed to generate the downlink signal synchronized with the touch sensor driving signal if the stylus 10 is an active stylus. The processing unit 18 then outputs the downlink signal to the tip electrode 14 through the input/output unit 12 during a transmission period of a touch period.

The stylus 10 may further comprise a wireless communication unit (WCU) 190. The wireless communication unit 190 may be configured to communicate with the host device 20 via Bluetooth, Wi-Fi, near-field communication (NFC), etc. The wireless communication unit 190 may include a receiver to receive communication commands, pairing requests, etc. from a wireless communication unit (WCU) 290 at the host device 20. The stylus 10 may further comprise a power supply (not shown), which may comprise a battery for powering the various components of the stylus 10. The battery may be rechargeable, replaceable, disposable, etc.

In some examples, the stylus 10 may additionally or alternatively be wired to the host device 20, for example, by a Universal Serial Bus (USB) connection and may communicate with the host device via such a connection.

Furthermore, the processing unit 18 may be configured to control specific parameters of the stylus 10 (e.g. sensitivity or the like) or to display anomaly information to a user based on a feedback signal (FS) received from the host device 20 via the wireless communication unit 190. As an example, sensitivity control may be achieved by temporarily applying a bias voltage to at least one amplifier of the reception unit 13 to control the receiver gain. Such gain control may be necessary to adjust the sensitivity of the reception unit 13 for a better reception of the uplink signal in case of a decreased uplink signal level due to a body touch.

Thus, in the present example, the sensitivity of the reception unit 13 or another signal processing parameter of the stylus 10 can be adjusted based on the analysis of an anomaly detected by the anomaly detector 24 and analyzed by the anomaly analyzer 24. More specifically, in response to a detected anomaly, the anomaly analyzer 24 generates and forwards a feedback signal indicating the kind of anomaly or a resultant action to a transmitter of the wireless communication unit 290 of the host device 20, which transmits the feedback signal to a receiver of the wireless communication unit 190 of the stylus 10. The wireless communication unit 190 of the stylus 10 forwards the received feedback signal to the processing unit 18 which generates a corresponding control output to control a corresponding processing parameter (e.g. amplification) of the transmission unit 15 so that e.g. the level of the down signal is momentarily or temporarily increased to compensate for an anomaly (distortion) due to an insufficient signal level.

As a further example, the feedback signal may indicate different levels of signal parameters to provide an adaptive anomaly control at the stylus 10 in dependence on the result of the anomaly analysis.

The stylus 10 may further comprise a force or pressure sensor 120 with an optional force or pressure response circuit (not shown), which together with the processing unit(s) 18 may collectively be referred to as the inking system. The inking system detects force or pressure applied to the tip electrode 14, optionally increases force or pressure sensitivity, converts the detected force or pressure to an output value (e.g. reported (inking) level) and communicates the output value to the host device 20.

As an example, the output value may be an encoded digitizer signal (i.e. the downlink signal) and transmitted to the digitizer of the host device 20. At the host device 20, the received output value is detected and forwarded to the ink control application or unit (e.g. a drawing application or unit) 21, where it is utilized to generate digital ink at a determined location of the stylus 10 with a weight (e.g., thickness or darkness) or other ink parameter corresponding to the adapted and reported force, pressure or inking level.

The input/output unit 12, the reception unit 13, the transmission unit 15, the processing unit(s) 18 and other system components of the stylus 10 may be implemented in an application specific integrated circuit (ASIC), system on chip (SOC), a field programmable gate array (FPGA), a micro-processing unit, etc.

The stylus 10 may further include one or more buttons (not shown) for changing operational modes of the stylus. For example, when button is depressed a signal communicated to the host device may inform the host device that the stylus 10 is in an erasure mode. Furthermore, such operational modes may indicate a color of the digital ink, writing patterns (e.g., dotted lines), writing utensil (e.g., brush, pen, marker, pencil). The detected force or pressure may be indicated with different operational modes. For example, when in an erasure mode, the detected force or pressure may indicate an erasure thickness. The buttons may also be used to initiate a device pairing with the host device 20.

In examples, the stylus body may be formed of a material suitable for enclosing the components described herein. The stylus body may be formed from, for example without limitation, plastic, rubber, metal, carbon fiber, etc. and/or any combinations thereof.

To summarize, an apparatus and method for improving signal quality of a sensor signal have been described, wherein an AI-based anomaly detector is configured to recognize an anomaly in a sensor output data stream. This approach can be used to predict and identify rare anomaly signals that are not handled properly by noise removal algorithms and help subsequent algorithms to get better decisions on the fly to better handle anomalous samples.

It will be appreciated that the above embodiments have been described by way of example only. The invention can be applied to any type of touch screen system with any type of input device that may involve a body touch of a user. The touch screen 22 may be implemented on the basis of a liquid crystal display (LCD), a field emission display (FED), a plasma display panel (PDP), an organic light emitting display device, an electrophoresis display, and the like.

Moreover, the invention can be applied in any sensor-based system where sensor signals are received and used as output or control signals. The AI-based anomaly detection of the invention can be used in the domain of gathering and analyzing sensor data of e.g. loT (Internet of Things) devices, mobile sensors, optical sensors (e.g. cameras), acoustic sensors (e.g. microphones) or the kind of sensors. Be it a mobile app or a network failure, any anomaly due to a sudden degradation in performance can be detected by the invention. Additionally, anomaly detection can provide supportive data that can identify the root cause of a problem. Furthermore, Statistical Process Control (or SPC) is a quality standard that is common in manufacturing processes. Quality-related sensor data on product or process measures is retrieved during the manufacturing run-time process and can be plotted on a graph to monitor if the data is within the configured control limits. Here, the proposed Ai-based anomaly detection can be deployed to check if any data falls outside the control limits and to determine the root cause. In short, anomaly detection in SPC can be used to detect any product variation or any issue occurring in the manufacturing process that needs to be immediately resolved.

Furthermore, the anomaly detection may be used as a part of production-quality tests in factory, or large user experience research (which does not need to be done on the fly but in an offline manner e.g. for more than one stylus).

More generally, according to a first aspect disclosed herein, there is provided an apparatus for improving signal quality of a sensor signal, the apparatus comprising:
a receiver for receiving an input signal from a sensor device,
at least one artificial intelligence (AI) processor for detecting an anomaly of the input signal by using an artificial intelligence algorithm;
an analyzer for classifying the detected anomaly and initiating an anomaly handling process based on the result of the classification.

In embodiments, the sensor device may comprise a touch sensor of a touch-sensitive display device.

In embodiments, the at least one AI processor may be configured to use a supervised or unsupervised AI algorithm that is trained by a learning process to discriminate valid sensor signals from non-valid anomaly signals on the fly.

In embodiments, the analyzer may be configured to classify patterns in the input signal to detect at least one of unknown or unfamiliar noise and/or interference patterns and hardware problems that create anomaly signals.

In embodiments, the input signal may be a frequency-domain signal.

In embodiments, the at least one AI processor may be configured to supply the valid sensor signal and the anomaly signal to at least one of a regression analysis unit for generating regression reports and to a telemetry unit for monitoring purposes.

In embodiments, the at least one AI processor may be configured to apply a machine learning algorithm where desired input signals without anomalies and resulting desired outcomes are provided in a learning phase.

In embodiments, the at least one AI processor may be configured to apply K-means clustering that involves calculating a mean value of each cluster, setting an initial threshold value, determining the distance of each data point from the mean value during a testing process, and identifying the cluster that is nearest to a test data point, wherein an anomaly is detected if a distance value is greater than a predetermined threshold value.

In embodiments, the analyzer may be configured to check whether a detected anomaly signal is a continued defect that has been detected at least once before.

In embodiments, the analyzer may be configured to check whether the detected anomaly signal has always occurred in connection with the same input device or type of input device or across different input devices or types of input devices.

In embodiments, the analyzer may be configured to determine as a cause of the anomaly a single production error on the same batch or an error on one production batch compare to other production batches.

In embodiments, the analyzer may be configured to define anomalies per cluster of multiple input devices or types of input devices based on clustering criteria including at least one of cluster per batch, cluster per product, cluster per user geo-location, cluster per hours or month usage and cluster per used applications.

According to a second aspect disclosed herein, there is provided a host device comprising an apparatus of the first aspect, a touch screen and a digitizer.

According to another aspect disclosed herein, there is provided a method of improving signal quality of a sensor signal, the method comprising:
receiving an input signal from a sensor device,
detecting an anomaly of the input signal by using an artificial intelligence algorithm; classifying the detected anomaly; and
initiating an anomaly handling process based on the result of the classification.

According to another aspect disclosed herein, there is provided a computer program embodied on computer-readable storage and comprising code configured so as when run on one or more processors to perform the method of any embodiment disclosed herein.

Examples and embodiments described herein may be implemented as logical steps in one or more computer systems. The logical operations may be implemented (1) as a sequence of processor-implemented steps executing in one or more computer systems and (2) as interconnected machine or circuit modules within one or more computer systems. The implementation is a matter of choice, dependent on the performance requirements of the computer system used for implementation. Accordingly, logical operations making up examples or embodiments described herein may be referred to variously as operations, steps, objects, or modules. Furthermore, it should be understood that logical operations may be performed in any order, adding and omitting as desired, unless explicitly claimed otherwise or a specific order is inherently necessitated by the claim language.

Other variants and applications of the disclosed techniques may become apparent to a person skilled in the art once given the present disclosure. The scope of the present disclosure is not limited by the above-described embodiments but only by the accompanying claims.

## Claims

1. An apparatus for improving signal quality of a sensor signal, comprising:
a receiver for receiving an input signal from a sensor device,
at least one artificial intelligence, AI, processor for detecting an anomaly of the input signal by using an AI algorithm;
an analyzer for classifying the detected anomaly and initiating an anomaly handling process based on the result of the classification.

2. The apparatus of claim 1, wherein the sensor device comprises a touch sensor of a touch-sensitive display device.

3. The apparatus of claim 1, wherein the at least one AI processor is configured to use a supervised or unsupervised AI algorithm that is trained by a learning process to discriminate valid sensor signals from non-valid anomaly signals on the fly.

4. The apparatus of claim 1, wherein the analyzer is configured to classify patterns in the input signal to detect at least one of unknown or unfamiliar noise and/or interference patterns and hardware problems that create anomaly signals.

5. The apparatus of claim 1, wherein the input signal is a frequency-domain signal.

6. The apparatus of claim 3, wherein the at least one AI processor is configured to supply the valid sensor signal and the anomaly signal to at least one of a regression analysis unit for generating regression reports and to a telemetry unit for monitoring purposes.

7. The apparatus of claim 1, wherein the at least one AI processor is configured to apply a machine learning algorithm where desired input signals without anomalies and resulting desired outcomes are provided in a learning phase.

8. The apparatus of claim 1, wherein the at least one AI processor is configured to apply K-means clustering that involves calculating a mean value of each cluster, setting an initial threshold value, determining the distance of each data point from the mean value during a testing process, and identifying the cluster that is nearest to a test data point, wherein an anomaly is detected if a distance value is greater than a predetermined threshold value.

9. The apparatus of claim 1, wherein the analyser is configured to check whether a detected anomaly signal is a continued defect that has been detected at least once before.

10. The apparatus of claim 9, wherein the analyser is configured to check whether the detected anomaly signal has always occurred in connection with the same input device or type of input device or across different input devices or types of input devices.

11. The apparatus of claim 1, wherein the analyser is configured to determine as a cause of the anomaly a single production error on the same batch or an error on one production batch compare to other production batches.

12. The apparatus of claim 1, wherein the analyser is configured to define anomalies per cluster of multiple input devices or types of input devices based on clustering criteria including at least one of cluster per batch, cluster per product, cluster per user geo-location, cluster per hours or month usage and cluster per used applications.

13. A host device comprising an apparatus of claim 1, a touch screen and a digitizer.

14. A method of improving signal quality of a sensor signal, comprising:
receiving an input signal from a sensor device,
detecting an anomaly of the input signal by using an artificial intelligence algorithm;
classifying the detected anomaly; and
initiating an anomaly handling process based on the result of the analysis.

15. A computer program embodied on computer-readable storage and comprising code configured so as when run on one or more processors to perform the method of claim 14.
